# EUROPÄISCHE PATENTANMELDUNG

(11) **EP 0 826 585 A2**
(43) Veröffentlichungstag der Anmeldung: **04.03.1998**
(21) Anmeldenummer: 97115695.5
(22) Anmeldetag: 31.03.1993
(51) Int. Cl.: B62L 3/02, B60T 11/16

(54) **Hydraulische Fahrradbremse**

(30) Priorität: 14.04.1992 CH 1222/92
(62) Teilanmeldung aus: 93906420.0
(71) Anmelder: Süle, Sandor, CH-8240 Thayngen (CH)
(72) Erfinder: Süle, Sandor, CH-8240 Thayngen (CH)
(74) Vertreter: Weiss, Peter, Dr. rer. nat.

(57) **Zusammenfassung**

Bei einer Fahrradbremse mit wenigstens einem, mit einem Handgriff (2) verbundenen Geberzylinder und zumindest einem daran über eine Bremsleitung (26) angeschlossenen, einer Felge (37) zugeordneten Bremszylinder (24), der über einen Träger (27) an einem Fahrrad befestigt ist, soll der Träger (27) um einen Winkel (α) weg von der Felge (37) schwenkbar sein.

## Beschreibung

Die Erfindung betrifft eine Fahrradbremse mit wenigstens einem, mit einem Handgriff verbundenen Geberzylinder und zumindest einem daran über eine Bremsleitung angeschlossenen, einer Felge zugeordneten Bremszylinder, der über einen Träger an einem Fahrrad befestigt ist.

Der vorliegenden Erfindung liegt die Aufgabe zugrunde, ein rasches Wechseln des Rades oder der Bremsschuhe zu ermöglichen.

Zur Lösung dieser Aufgabe führt, dass der Träger um einen Winkel weg von der Felge schwenkbar ist.

Weitere Vorteile, Merkmale und Einzelheiten der Erfindung ergeben sich aus den nachfolgenden Beschreibungen sowie anhand der Zeichnungen. Diese zeigen in:
Fig. 1: Skizzenhafte Ansicht eines Fahrrades mit angebrachten Felgenbremsen;

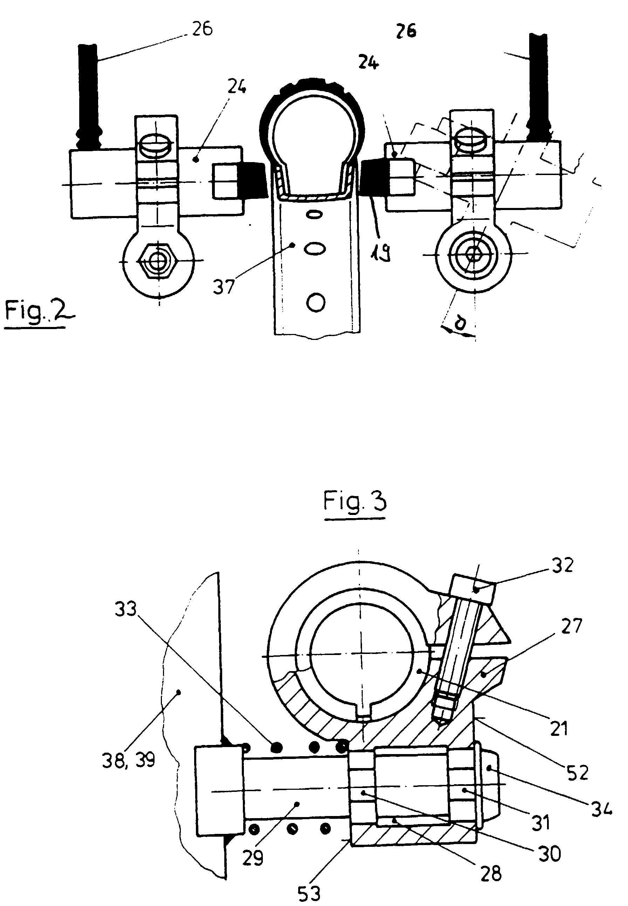

Fig. 2: Draufsicht auf einen Bremszylinder mit einem abklappbaren Träger an einem Fahrzeugreifen;
Fig. 3: Seitenansicht des abklappbaren Trägers, teilweise geschnitten.

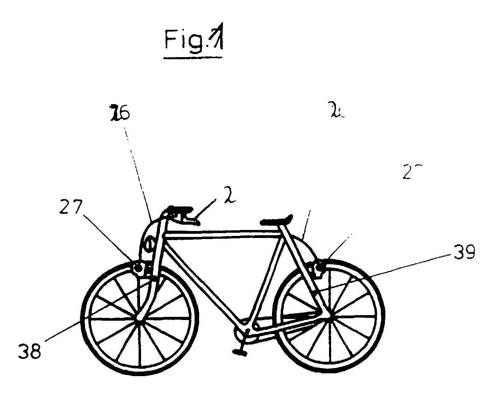

Eine Fahrradbremse für ein in Fig. 1 skizziertes Fahrrad besteht aus einem Geberzylinder mit Handhebel (2) und einer vom Geberzylinder ausgehenden Bremsleitung (26), die direkt an den Bremszylinder (24) mit Bremsflüssigkeit versorgen.

Die Bremszylinder (24) sind mittels eines abklappbaren Trägers (27) an dem Fahrrad befestigt. Der Träger (27) sollte über einen Bolzen (29) mit dem Rahmen- bzw. Gabelrohr (38, 39) fest verbunden sein, z.B. durch Anlöten.

Zur genauen Anpassung der Bremsschuhe (19) an die Felgen (37), wobei die Bremse wie ein Boxersystem funktioniert, kann der Bremszylinder (24) durch ein im Träger (27) liegendes geschlitztes Kugelgelenk (21) durch kegelförmiges Schwenken und oszillierende Bewegungen genau an den Feigenrand und -abstand eingestellt werden. Ist der Bremsschuh (19) angepasst, wird der Bremszylinder (24) durch die klemmende Wirkung des geschlitzten Kugelgelenks (21), die durch Anziehen der Schraube (32) und Zusammenzeihen des geschlitzten Trägers (27) erreicht wird, arretiert.

Zum raschen Wechseln des Rades oder der Bremsschuhe (19) kann der Träger (27) um den Winkel α geschwenkt werden. Der Träger (27) besitzt, um schwenkbar zu sein, unterhalb der Aufnahme des Kugelgelenks (21) parallel in radialer Richtung laufend eine Sechskantbohrung, die im mittleren Bereich ihrer Tiefe eine runde Ausdrehung (28) hat, deren Tiefe im Minimum die Länge des zum Gabelrohr (38, 39) näherliegenden Sechskant (30) besitzt bei überfahrenem vorderen Sechskant (31) von der vorderen Stirnfläche (52) des Trägers (27) und einem Durchmesser, der grösser als das Sechskant-Eckmass sein muss. Zu beachten ist, dass die Sechskante (30, 31) nur dort einen Anfang und ein Ende haben, wo sich die beiden Stirnflächen (52, 53) der Sechskantbohrung des Trägers (27) befinden. Dieser Träger (27) besitzt im mittleren Bereich seiner Sechskantbohrung eine Eindrehung, deren Durchmesser im Maximum gleich gross sein muss, wie das Sechskant-Schlüsselmass und deren Länge im Minimum so gross ist, wie die Länge des Sechskants (31), der sich an der Stirnseite (52) des Trägers (27) und des Schraubenkopfes einer Schraube (34) befindet. Von selbständig erfinderischer Bedeutung ist, dass statt eines Sechskants auch ein anderer Mehrkant- oder Zahnbolzen benutzt werden kann.

Will man jetzt den Träger (27) schwenken, muss er über den hinteren Sechskant (30) in Richtung des Gabelrohres (38, 39) gedrückt werden, wobei ein Stift, der vorher herausgenommen werden muss, oder eine Druckfeder (33), die den Träger (27) auf den Schraubenkopf der Schraube (34) drückt, der Arretierung und Sicherung dient.

| **Positionszahlenliste** | | | | | |
|---|---|---|---|---|---|
| 1 | | 34 | Schraube | 67 | |
| 2 | Handhebel | 35 | | 68 | |
| 3 | | 36 | | 69 | |
| 4 | | 37 | Felge | 70 | |
| 5 | | 38 | Gabelrohr | 71 | |
| 6 | | 39 | Gabelrohr | 72 | |
| 7 | | 40 | | 73 | |
| 8 | | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | Bremsleitung | 49 | | | |
| 17 | | 50 | | | |
| 18 | | 51 | | | |
| 19 | Bremsschuh | 52 | Stirnfläche | | |
| 20 | | 53 | Stirnfläche | | |
| 21 | Kugelgelenk | 54 | | | |
| 22 | | 55 | | | |
| 23 | | 56 | | α | Winkel |
| 24 | Bremszylinder | 57 | | | |
| 25 | | 58 | | | |
| 26 | | 59 | | | |
| 27 | Träger | 60 | | | |
| 28 | Ausdrehung | 61 | | | |
| 29 | Bolzen | 62 | | | |
| 30 | Sechskant | 63 | | | |
| 31 | Vorderer Sechskant | 64 | | | |
| 32 | Schraube | 65 | | | |
| 33 | Druckfeder | 66 | | | |

## Patentansprüche

1. Fahrradbremse mit wenigstens einem, mit einem Handgriff (2) verbundenen Geberzylinder und zumindest einem daran über eine Bremsleitung (26) angeschlossenen, einer Felge (37) zugeordneten Bremszylinder (24), der über einen Träger (27) an einem Fahrrad befestigt ist,
dadurch gekennzeichnet,
daß der Träger (27) um einen Winkel (α) weg von der Felge (37) schwenkbar ist.

2. Fahrradbremse nach Anspruch 1, dadurch gekennzeichnet, daß der Träger (27) axial verschiebbar und drehbar auf einem Bolzen (29) sitzt, der mit einem Rahmen- bzw. Gabelrohr (38, 39) des Fahrrades fest verbunden ist.

3. Fahrradbremse nach Anspruch 2, dadurch gekennzeichnet, daß auf dem Bolzen (29) zwei Mehrkante (30, 31) voneinander beabstandet festliegen, welche in eine Mehrkantbohrung des Trägers (27) eingreifen.

4. Fahrradbremse nach Anspruch 3, dadurch gekennzeichnet, daß der Träger (27) im mittleren Bereich seiner Mehrkantbohrung eine Eindrehung (28) aufweist, deren Durchmesser zumindest gleich groß ist wie das Schlüsselmaß der Mehrkante (30, 31) und deren Länge im Minimum so groß ist, wie die Länge des Mehrkantes (31) der sich an der Stirnseite (52) des Trägers (27) befindet.

5. Fahrradbremse nach einem der Ansprüche 2 bis 4, dadurch gekennzeichnet, daß der Träger (27) über einen Stift gegenüber dem Bolzen (29) verdrehgesichert ist.

6. Fahrradbremse nach einem der Ansprüche 2 bis 5, dadurch gekennzeichnet, daß sich der Träger (27) gegen eine Druckfeder (33) abstützt, die den Träger (27) auf den Schraubenkopf einer Schraube (34) drückt.

7. Fahrradbremse nach wenigstens einem der Ansprüche 1 bis 6, dadurch gekennzeichnet, daß der Bremszylinder (24) in einem in axialer Richtung geschlitzten Kugelgelenk (21) und dieses in dem ebenfalls geschlitzten Träger (27) sitzt.

8. Fahrradbremse nach Anspruch 7, dadurch gekennzeichnet, daß eine Arretierung und Klemmung des Bremszylinders (24) in dem geschlitzten Kugelgelenk (21) und dem geschlitzten Träger (27) durch eine Schraube (32) erfolgt.
